# EUROPÄISCHE PATENTSCHRIFT

(11) **EP 0 920 238 B1**
(45) Veröffentlichungstag und Bekanntmachung des Hinweises auf die Patenterteilung: **07.03.2007**
(21) Anmeldenummer: 98440239.6
(22) Anmeldetag: 30.10.1998
(51) Int. Cl.: H04Q 11/04, G01C 21/36

(54) **Verfahren zur Übermittlung einer Teilnehmernummer eines gewünschten Teilnehmers, sowie Telefonauskunftseinrichtung und Endgerät hierfür**
Method of transmission of subscriber number of a desired subscriber, and telephone directory arrangement and terminal therefore
Méthode de transmission d'un numéro d'abonné d'un abonné désiré, et système d'annuaire téléphonique et terminal pour le même

(30) Priorität: 28.11.1997 DE 19752838
(43) Veröffentlichungstag der Anmeldung: 02.06.1999
(73) Patentinhaber: ALCATEL, 75008 Paris (FR)
(72) Erfinder: Klein, Johann, 71679 Asperg (DE)
(74) Vertreter: Brose, Gerhard

(56) Entgegenhaltungen:
- WO-A-97/22209
- US-A- 5 543 789
- "Mobile Assistenten - Fahrerinformation über das Mobilfunknetz" ELEKTRONIK LITERATUR VERLAG JOURNAL, 1. September 1996 (1996-09-01), Seiten 60-64, XP002239291
- FRANK D L: "Information systems: an integral part of future vehicles" PROCEEDINGS OF THE POSITION LOCATION AND NAVIGATION SYMPOSIUM (PLANS '90), LAS VEGAS, 20. - 23. März 1990, Seiten 52-55, XP010001096 IEEE, NEW YORK, US

## Beschreibung

Die vorliegende Erfindung betrifft ein Verfahren zur Übermittlung einer Teilnehmernummer eines gewünschten Teilnehmers von einer Telefonauskunftseinrichtung zu einem Endgerät gemäß dem Oberbegriff des Anspruchs 1, sowie eine Telefonauskunftseinrichtung und ein Endgerät hierfür.

Neben der Suche in einem Telefonbuch in Papierform und neuerdings auch in elektronischer Form ist eine Anfrage über ein Telekommunikationsendgerät bei einer Telefonauskunft eine häufig genutzte Möglichkeit, eine Teilnehmernummer eines gewünschten Kommunikationspartners zu erfahren. Bei einer solchen Anfrage gibt der Anfragende Name und Wohnort des gewünschten Kommunikationspartners der Telefonauskunft an, worauf diese dann die Teilnehmernummer ermittelt und ansagt. Der Anfragende muß sich dann die angesagte Teilnehmernummer notieren. Nach Auslösen der Verbindung zur Telefonauskunft muß für den Rufaufbau zu dem gewünschten Kommunikationspartner die Teilnehmernummer an dem Telekommunikationsendgerät eingegeben werden. Der Anfragende kann sowohl die Teilnehmernummer bei der Ansage falsch verstehen als auch beim Notieren der Teilnehmernummer oder dem Eingeben der Teilnehmernummer an dem Telekommunikationsendgerät einen Fehler machen, so daß die Verbindung zu dem Kommunikationspartner nicht aufgebaut werden kann und eventuell sogar die Teilnehmernummer erneut bei der Telefonauskunft erfragt werden muß.

Auf dem Gebiet der Verkehrstelematik ist in dem Artikel "Mobile Assistenten-Fahrerinformation über das Mobilfunknetz", erschienen im ELVjournal, Ausgabe 3/96 auf den Seiten 60-64, auf Seite 61 ein Bordrechner mit Display und Terminal beschrieben, der in Zusammenwirken mit einem Mobilfunkendgerät für das D2-Mobilfunknetz aktuelle Verkehrsinformationen zur Verfügung stellen kann und auch eine komfortable Möglichkeit eröffnet, eine Pannenmeldung an eine Dienstleistungszentrale abzusetzen. Weiterhin ist es mit diesem Bordrechner auf eine in dem genannten Artikel nicht näher beschriebene Weise möglich, bei der Dienstleistungszentrale eine Adresse eines möglichen Kommunikationspartners einschließlich dessen Teilnehmernummer zu erfragen, die dann auf dem Display des Bordrechners angezeigt wird. Durch einen "einfachen Tastendruck" kann dann eine Telefonverbindung aufgebaut werden. Der Bordrechner arbeitet in diesem Fall mit dem Mobilfunkendgerät in ähnlicher Form zusammen, wie bei einer CSTA-Anlage (CSTA = Computer Aided Telephony Applications), indem die Funktionen des Mobilfunkendgerätes durch die Funktionen des Bordrechners in komfortabler Weise ergänzt werden.

Meistens wird jedoch ein Mobilfunkendgerät ohne die Zusammenwirkung mit einem Bordrechner eingesetzt, weil entweder kein solcher zur Verfügung steht - der erwähnte Artikel handelt von einem Großversuch - oder weil das Mobilfunkendgerät außerhalb eines Fahrzeuges benutzt wird. Dann stehen die obengenannten Komfortfunktionen nicht mehr zur Verfügung und die bereits erwähnten Fehlermöglichkeiten beim Verständnis einer Teilnehmernummer, deren Notiz und deren Eingabe in ein Endgerät treten wieder auf. Ähnlich unkomfortabel und fehlerträchtig ist die Kommunikation mit einer Telefonauskunft bei Benutzung eines leitungsgebundenen Endgerätes.

Ein Applikations-Interface zur Ermittlung einer Telnehmernummer ist in der Internationalen Patentanmeldung WO-A-9722209 beschrieben. Dort ist eine Service-Logik beschrieben die via Intelligentes Netz Information wie beispielsweise Telefonnummern oder Service Codes aus einem Telekommunikationsnetz über das Internet zugänglich macht.

Aufgabe der Erfindung ist es, eine von einer Telefonauskunft ermittelte Teilnehmernummer an einem Telekommunikationsendgerät komfortabel zur Verfügung zu stellen.

Diese Aufgabe wird durch ein Verfahren gemäß der technischen Lehre des Anspruchs 1, eine Telefonauskunftseinrichtung gemäß der technischen Lehre des Anspruchs 7 und ein Endgerät gemäß der technischen Lehre des Anspruchs 8 gelöst. Weitere vorteilhafte Ausgestaltungen der Erfindung sind den abhängigen Ansprüchen und der Beschreibung zu entnehmen.

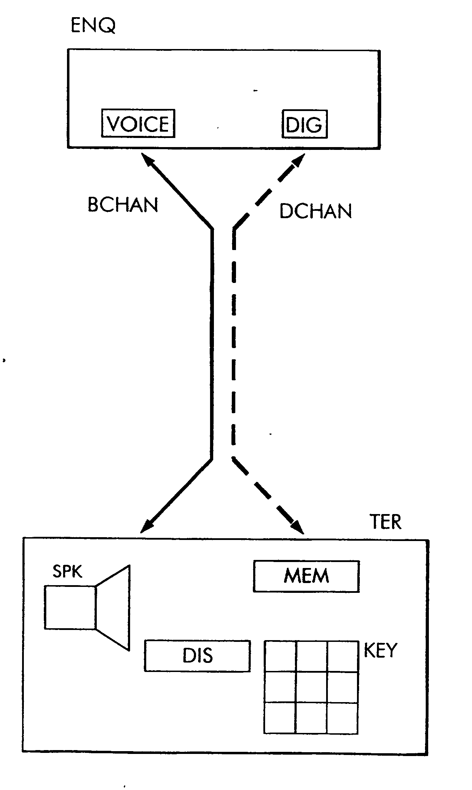

Im folgenden werden die Erfindung und ihre Vorteile anhand eines Ausführungsbeispiels unter Zuhilfenahme der Zeichnung dargestellt.
- Die Figur: zeigt ein Beispiel einer erfindungsgemäßen Anordnung aus einem erfindungsgemäßen Endgerät TER und einer erfindungsgemäßen Telefonauskunftseinrichtung ENQ, die über die Kanäle BCHAN und DCHAN miteinander verbunden sind.

In der Figur ist eine Anordnung dargestellt, mit der das erfindungsgemäße Verfahren angewendet werden kann. Eine Telefonauskunftseinrichtung ENQ ist über einen Kanal BCHAN für die Übertragung von Sprache und über einen Kanal DCHAN für die Übertragung von Daten mit einem Endgerät TER verbunden. Der Kanal BCHAN kann z.B. ein B-Kanal einer ISDN-Verbindung, der Kanal DCHAN ein D-Kanal oder ein weiterer B-Kanal derselben ISDN-Verbindung sein. Es ist aber auch möglich, daß zwischen der Telefonauskunftseinrichtung ENQ und dem Endgerät TER eine analoge Sprachverbindung mit einem Kanal BCHAN für Sprache besteht und der Kanal DCHAN ein In-Band-Signalisierungskanal ist, auf dem Informationen z.B. mit Hilfe von DTMF-Signalen (DTMF = Dual Tone Multi Frequency) übertragen werden können.

Wenn nun ein Benutzer des Endgerät TER eine Teilnehmernummer erfahren will, wird er, wie er es gewöhnt ist, zunächst eine Verbindung zu der Telefonauskunftseinrichtung ENQ aufbauen. Über den Kanal BCHAN hat das Endgerät TER dann eine Sprachverbindung zu der Spracheinrichtung VOICE zur Spracheingabe und Sprachausgabe in der Telefonauskunftseinrichtung ENQ. Die Spracheinrichtung VOICE kann im einfachsten Fall aus einem Mikrofon und einem Lautsprecher bestehen oder aus einem Modul zur automatischen Spracherkennung und einem Modul zur elektronischen Sprachgenerierung. Über den Kanal BCHAN gibt der Benutzer Name und Wohnort des gewünschten Kommunikationspartners der Telefonauskunftseinrichtung ENQ an, worauf dort die Teilnehmernummer ermittelt wird. Die Spracheinrichtung VOICE sendet dann eine Sprachnachricht mit der ermittelten Teilnehmernummer über den Kanal BCHAN, die von einem Lautsprecher SPK in dem Endgerät TER ausgegeben wird.

Zusätzlich zu der Sprachübertragung der ermittelten Teilnehmernummer oder auch anstelle der Sprachübertragung bildet das Modul DIG in der Telefonauskunftseinrichtung ENQ aus der ermittelten Teilnehmernummer eine numerische Zeichenkette, die von der Telefonauskunftseinrichtung ENQ auf dem Kanal DCHAN an das Endgerät TER versendet wird. Im Gegensatz zu einer digitalisierten Sprachinformation, in der die Teilnehmernummer auf dem Kanal BCHAN versendet werden kann, z.B. wenn der Kanal BCHAN ein B-Kanal einer ISDN-Verbindung ist, soll hier und im folgenden der Begriff "numerische Zeichenkette" als ein Synonym für eine nicht sprachgebundene Darstellung der Teilnehmernummer verstanden und verwendet werden. Auch die Darstellung der Teilnehmernummer mit Hilfe der genannten DTMF-Signale kann als eine numerische Zeichenkette verstanden werden, da jeder Ziffer der Teilnehmernummer eigene Frequenzen zugeordnet wird. Das Endgerät TER wandelt die Teilnehmernummer aus der numerischen Zeichenkette in ein innerhalb des Endgerätes TER verwendetes Format um, so daß die Teilnehmernummer in einem Speicher MEM des Endgerätes TER abgespeichert werden kann. Die numerische Zeichenkette kann z.B. im Rahmen einer User-to-User-Signalisierung auf dem Kanal DCHAN befördert werden, wie sie das DSS1-Protokoll für ISDN-Telekommunikationsnetze als Leistungsmerkmal "kundenspezifische Zeichengabeinformation während einer Verbindung" unter der Abkürzung "UUS3" anbietet. Wenn die numerische Zeichenkette mit Hilfe einer User-to-User-Signalisierung übertragen wurde, muß das Endgerät TER die numerische Zeichenkette aus der Signalisierungsnachricht bestimmen, bevor die Teilnehmernummer in ein internes Format gewandelt und abgespeichert werden kann. Es kann jedoch für die Übertragung der Teilnehmernummer auch eine besondere Form der Signalisierung zwischen der Telefonauskunftseinrichtung ENQ und dem Endgerät TER festgelegt werden, z.B. indem im Rahmen des DSS1-Protokolles eine solche Nachricht definiert wird.

Als eine weitere Alternative kann die Teilnehmernummer auch in Form einer CLI-Nachricht (Calling Line Identification) von der Telefonauskunftseinrichtung ENQ an das Endgerät TER übertragen werden. Eine CLI-Nachricht kann sowohl in einem ISDN-Telekommunikationsnetz auf einem D-Kanal als auch in einem analogen Telekommunikationsnetz in Form einer In-Band-Signalisierung übertragen werden. An sich ist eine CLI-Nachricht definitionsgemäß dazu vorgesehen, einem Angerufenen die Telefonnummer eines Anrufenden mitzuteilen. Deshalb wird üblicherweise von Einrichtungen eines Telekommunikationsnetzes, z.B. von einer in der Figur nicht dargestellten, das Endgerät TER bedienende Ortsvermittlungsstelle, überprüft, ob die von einem Anrufenden übertragene CLI-Nachricht mit dessen Teilnehmernummer übereinstimmt. Nur dann wird die CLI-Nachricht an den Angerufenen übertragen. Wenn diese Überprüfung jedoch für Verbindungen mit der Telefonauskunftseinrichtung ENQ ausgeschältet wird, kann die Telefonauskunftseinrichtung ENQ auch eine CLI-Nachricht an das Endgerät TER senden, die nicht die Teilnehmernummer der Telefonauskunftseinrichtung ENQ, sondern eine bei der Telefonauskunftseinrichtung ENQ erfragte Teilnehmernummer enthält.

Aus dem Speicher MEM kann die Teilnehmernummer zur Anzeige auf einer Anzeigevorrichtung DIS des Endgerätes TER weitergegeben werden, so daß sie der Benutzer bequem ablesen und notieren kann. Nach Auslösen der Verbindung kann der Benutzer die Teilnehmernummer auch zu einem Rufaufbau zu dem gewünschten Kommunikationspartner verwenden. Dabei braucht der Benutzer die Teilnehmernummer nicht mehr eigens in das Endgerät TER eingeben, sondern er drückt lediglich eine Taste des Tastenfeldes KEY, z.B. die Wahlwiederholungstaste, und veranlaßt damit das Endgerät TER dazu, die gespeicherte Teilnehmernummer direkt als Wahlinformation zu nutzen. Das Endgerät TER kann aber auch nach dem Auslösen der Verbindung zu der Telefonauskunftseinrichtung ENQ selbständig, also ohne einen Tastendruck auf das Tastenfeld KEY mit dem Rufaufbau zu dem gewünschten Kommunikationspartner beginnen.

Durch die schnelle Übertragung der Teilnehmernummer in Form einer numerischen Zeichenkette kann die Verbindung zwischen der Telefonauskunftseinrichtung ENQ und dem Endgerät TER früher ausgelöst werden, als wenn die Teilnehmernummer auf dem Sprachweg angesagt und vom Benutzer notiert werden muß. Dadurch wird die Verfügbarkeit der Telefonauskunftseinrichtung ENQ erhöht und es entstehen dem Benutzer geringere Kosten für die Belegung der Verbindung zur Telefonauskunftseinrichtung ENQ. Andrerseits kann durch die parallele Benutzung der beiden Kanäle BCHAN und DCHAN von dem Endgerät TER aus sowohl in gewohnter Sprachform als auch in komfortabler und schneller numerischer Form mit der Telefonauskunftseinrichtung ENQ kommuniziert werden.

Die Übertragung der Teilnehmernummer in Form einer numerischen Zeichenkette von der Telefonauskunftseinrichtung ENQ zu dem Endgerät TER kann automatisch, also ohne Zutun des Benutzers, bei jedem Anruf bei der Telefonauskunftseinrichtung ENQ erfolgen. Es ist jedoch auch möglich, daß der Benutzer auf dem Kanal BCHAN eine mündliche Anweisung gibt oder daß das Endgerät TER bei einem Tastendruck auf dem Tastenfeld KEY eine Nachricht, z.B. ebenfalls als User-to-User-Signalisierung auf dem Kanal DCHAN, an die Telefonauskunftseinrichtung ENQ versendet, so daß diese zur numerischen Übertragung der Teilnehmernummer angewiesen wird.

Durch die schnelle und effiziente Übertragung der Teilnehmernummer ist es auch möglich, daß bei einem Anruf bei der Telefonauskunftseinrichtung ENQ in kurzer Zeit mehrere Teilnehmernummern erfragt werden, z.B. indem der Benutzer die Daten mehrerer gewünschter Kommunikationspartner angibt und die Telefonauskunftseinrichtung ENQ dann eine Folge von Teilnehmernummern in numerischer Form versendet. Es könnte jedoch auch eine Interaktion zwischen dem Endgerät TER und der Telefonauskunftseinrichtung ENQ stattfinden, bei der der Benutzer jeweils nach Erhalt einer Teilnehmernummer durch einen Tastendruck auf dem Tastenfeld KEY das Endgerät TER zum Versenden einer Nachricht an die Telefonauskunftseinrichtung ENQ veranlaßt, mit der der Telefonauskunftseinrichtung ENQ jeweils ein weiterer Informationswunsch signalisiert wird. Dann kann der Benutzer des Endgerätes TER erneut eine Teilnehmernummer auf dem Kanal BCHAN bei der Telefonauskunftseinrichtung ENQ erfragen.

Das Endgerät TER kann sowohl in der geschilderten selbständigen Weise die numerische Zeichenkette interpretieren und die ermittelte Teilnehmernummer in den Speicher MEM eintragen, als auch durch die Telefonauskunftseinrichtung ENQ dazu veranlaßt werden. In diesem Falle kann die Telefonauskunftseinrichtung ENQ z.B. vor dem Versenden der Teilnehmernummer in Form einer numerischen Zeichenkette ein Signal versenden, durch welches das Endgerät TER für die dann folgende Teilnehmernummer empfangsbereit geschaltet wird. Es kann jedoch auch zunächst die numerische Zeichenkette und anschließend ein Signal versendet werden, welches in dem Endgerät TER die Interpretation der numerischen Zeichenkette bewirkt. Ein solches Signal wird vorteilhafter Weise ebenso wie die numerische Zeichenkette auf dem Kanal DCHAN übertragen und kann z.B. ebenfalls eine Nachricht aus dem DSS1-Protokoll für ISDN-Telekommunikationsnetze sein.

Weiterhin ist es möglich, daß der Benutzer auf dem Tastenfeld KEY eine Taste drückt, und das Endgerät TER daraufhin aus einer von der Telefonauskunftseinrichtung ENQ bereits empfangenen und zwischengespeicherten numerischen Zeichenkette die Teilnehmernummer ermittelt und in den Speicher MEM einspeichert.

Neben der Teilnehmernummer kann das Modul DIG in der Telefonauskunftseinrichtung ENQ auch Namen und Adresse des gewünschten Kommunikationspartners als alphanumerische Zeichenkette an das Endgerät TER versenden, so daß dieses neben der Teilnehmernummer auch den Namen und die Adresse auf der Anzeigevorrichtung DIS anzeigen kann. Der Benutzer kann somit leicht überprüfen, ob seine Angaben zu dem gewünschten Kommunikationspartner in der Telefonauskunftseinrichtung ENQ richtig verstanden wurden. Außerdem kann dann die Teilnehmernummer mit Hilfe der vollständigen Daten des Kommunikationspartners in dem Endgerät TER in wiederauffindbarer Weise in einen dauerhaften Speicher übernommen werden, z.B. über eine Kurzwahltaste verfügbar gemacht oder in ein sogenanntes persönliches Telefonbuch eingetragen werden, in dem eine Gruppe möglicher Kommunikationspartner des Benutzers eingetragen ist.

Wenn das Endgerät TER ein Mobilfunkendgerät ist, z.B. für das eingangs erwähnte D2-Mobilfunknetz geeignet ist, kann für den Kanal BCHAN ein Sprachkanal und für den Kanal DCHAN ein Organisationskanal einer Verbindung zwischen dem Endgerät TER und der Telefonauskunftseinrichtung ENQ auf dem D2-Mobilfunknetz verwendet werden. Auf einem solchen Organisationskanal kann eine erfragte Teilnehmernummer z.B. mit Hilfe einer SMS-Nachricht (Short Message Service) von der Telefonauskunftseinrichtung ENQ an das Endgerät TER übertragen werden.

## Patentansprüche

1. Verfahren zur Übermittlung einer Teilnehmernummer eines gewünschten Teilnehmers von einer Telefonauskunftseinrichtung (ENQ) zu einem Endgerät (TER), das mit der Telefonauskunftseinrichtung (ENQ) über ein Telekommunikationsnetz mit einem ersten Kanal (BCHAN) zur Sprachübertragung und einem zweiten Kanal (DCHAN) zur Datenübertragung verbunden ist, mit den Schritten
- Übertragen einer Anfrage mit den gewünschten Teilnehmer beschreibenden Daten von dem Endgerät (TER) zu der Telefonauskunftseinrichtung (ENQ) auf dem ersten Kanal (BCHAN),
- Versenden der Teilnehmernummer durch die Telefonauskunftseinrichtung (ENQ) in Form einer numerischen Zeichenkette auf dem zweiten Kanal (DCHAN),
- Übertragung der numerischen Zeichenkette von der Telefonauskunftseinrichtung (ENQ) zu dem Endgerät (TER) auf dem zweiten Kanal (DCHAN),
- Empfang der numerischen Zeichenkette durch das Endgerät (TER),
- Ermittlung der Teilnehmernummer aus der numerischen Zeichenkette durch das Endgerät (TER),
**durch gekennzeichnet, dass** das Verfahren die weiteren Schritte aufweist
- Einspeicherung der Teilnehmernummer in einen für eine direkte Anwahl der Teilnehmernummer vorgesehenen Speicher (MEM) des Endgerätes (TER)
- Ausgeben eines Aktionsbefehls von der Telefonauskunftseinrichtung (ENQ), der in dem Endgerät (TER) die Ermittlung der Teilnehmernummer aus der numerischen Zeichenkette und die Einspeicherung der Teilnehmernummer in einen für direkte Anwahl der Teilnehmernummer vorgesehenen Speicher (MEM) des Endgerätes (TER) auslöst.

2. Verfahren nach Anspruch 1, **dadurch gekennzeichnet, daß** die Teilnehmernummer in einer Anzeigevorrichtung des Endgerätes (TER) angezeigt wird.

3. Verfahren nach Anspruch 1, wobei das Telekommunikationsnetz ein ISDN-Netzwerk ist, **dadurch gekennzeichnet, daß** der zweite Kanal ein D-Kanal des ISDN-Netzwerkes ist.

4. Verfahren nach Anspruch 1, wobei das Telekommunikationsnetz ein GSM-Mobilfunknetzwerk ist, **dadurch gekennzeichnet, daß** der zweite Kanal ein Organisationskanal des Mobilfunknetzwerkes ist.

5. Verfahren nach Anspruch 1, **dadurch gekennzeichnet, daß** die Telefonouskunftseinrichtung (ENQ) den gewünschten Teilnehmer beschreibende Daten als alphanumerische Zeichenkette an dem Endgerät (TER) auf dem zweiten Kanal (DCHAN) versendet und daß das Endgerät (TER) die alphanumerische Zeichenkette empfängt, aus der alphanumerischen Zeichenkette die Daten ermittelt und auf einer Anzeigevorrichtung (DIS) anzeigt.

6. Verfahren noch Anspruch 1, **dadurch gekennzeichnet, daß** das Endgerät (TER) bei einem Tastendruck auf ein Tastenfeld (KEY) des Endgerätes (TER) der Telefonauskunftseinrichtung (ENQ) auf dem zweiten Kanal (DCHAN) eine Nachricht sendet, durch die der Telefonauskunftseinrichtung (ENQ) der Wunsch nach einer weiteren Auskunft signalisiert wird.

7. Telefonauskunftseinrichtung (ENQ), die über ein Telekommunikationsnetz mit einem Endgerät (TER) auf einer Verbindung mit einem ersten Kanal (BCHAN) zur Sprachübertragung und einem zweiten Kanal (DCHAN) zur Datenübertragung verbindbar ist, die Einrichtung Mittel zur Umwandlung einer Teilnehmernummer in eine numerische Zeichenkette aufweist und Mittel zum Versenden der numerischen Zeichenkette zu dem Endgerät (TER) auf dem zweiten Kanal (DCHAN) aufweist **dadurch gekennzeichnet,**
**daß** die Einrichtung Mittel aufweist, mit denen ein Aktionsbefehl ausgegeben werden kann, der in dem Endgerät (TER) eine Ermittlung der Teilnehmernummer aus der numerischen Zeichen kette und eine Einspeicherung der ermittelten Teilnehmernummer in einen für eine direkte Anwahl der Teilnehmernummer vorgesehenen Speicher (MEM) des Endgerätes (TER) bewirkt.

8. Endgerät (TER) für ein Telekommunikationsnetz, das über das Telekommunikationsnetz mit einer Telefonauskunftseinrichtung (ENQ) auf einer Verbindung mit einem ersten Kanal (BCHAN) zur Sprachübertragung und einem zweiten Kanal (DCHAN) zur Datenübertragung verbindbar ist, das Endgerät (TER) Mittel aufweist, mit denen es eine von der Telefonauskunft in Form einer numerischen Zeichenkette versendeten Teilnehmernummer eines Teilnehmeranschlusses auf dem zweiten Kanal (DCHAN) empfangen kann, das es Mittel aufweist, mit denen es die Teilnehmernummer aus der numerischen Zeichenkette ermitteln kann **dadurch gekennzeichnet, daß** es einen Speicher (MEM) aufweist, in welche die Teilnehmernummer eingespeichert werden kann und aus welcher das Endgerät (TER) die Teilnehmernummer zu einer unmittelbaren Anwahl des Teilnehmeranschlusses entnehmen kann, wobei ein von der Telefonauskunftseinrichtung ausgegebener Aktionsbefehl eine Ermittlung der Teilnehmernummer aus der numerischen Zeichenkette und eine Einspeicherung der ermittelten Teilnehmernummer in einen für eine direkte Anwahl der Teilnehmernummer vorgesehenen Speicher (MEM) des Endgerätes (TER) bewirkt.

## Claims

1. Method of transmission of a subscriber number of a desired subscriber from a telephone directory arrangement (ENQ) to a terminal (TER), which is connected to the telephone directory arrangement (ENQ) via a telecommunications network with a first channel (BCHAN) for voice transmission and a second channel (DCHAN) for data transmission, with the steps
- Transmission of an enquiry with data describing the desired subscriber from the terminal (TER) to the telephone directory arrangement (ENQ) on the first channel (BCHAN),
- Sending of the subscriber number by the telephone directory arrangement (ENQ) in the form of a numeric character string on the second channel (DCHAN),
- Transmission of the numeric character string from the telephone directory arrangement (ENQ) to the terminal (TER) on the second channel (DCHAN),
- Receipt of the numeric character string by the terminal (TER),
- Determination of the subscriber number from the numeric character string by the terminal (TER), **characterized in that** the method has the further steps
- Storing of the subscriber number in a memory (MEM) of the terminal (TER) provided for direct dialling of the subscriber number
- Output of an action command from the telephone directory arrangement (ENQ), triggering in the terminal (TER) the determination of the subscriber number from the numeric character string and the storing of the subscriber number in a memory (MEM) of the terminal (TER) provided for direct dialling of the subscriber number.

2. Method according to Claim 1, **characterized in that** the subscriber number is displayed in a display device of the terminal (TER).

3. Method according to Claim 1, the telecommunications network being an ISDN network, **characterized in that** the second channel is a D channel of the ISDN network.

4. Method according to Claim 1, the telecommunications network being a GSM mobile radio network, **characterized in that** the second channel is a control channel of the mobile radio network.

5. Method according to Claim 1, **characterized in that** the telephone directory arrangement (ENQ) sends data describing the desired subscriber as an alphanumeric character string to the terminal (TER) on the second channel (DCHAN) and that the terminal (TER) receives the alphanumeric character string, obtains the data from the alphanumeric character string and displays it on a display device (DIS).

6. Method according to Claim 1, **characterized in that** the terminal (TER) for a keystroke on the keypad (KEY) of the terminal (TER) sends a message to the telephone directory arrangement (ENQ) on the second channel (DCHAN), signalling to the telephone directory arrangement (ENQ) the wish for further directory assistance.

7. Telephone directory arrangement (ENQ), which can be connected via a telecommunications network with a terminal (TER) on a connection with a first channel (BCHAN) for voice transmission and a second channel (DCHAN) for data transmission, the arrangement having means of converting a subscriber number into a numeric character string and means for sending the numeric character string to the terminal (TER) on the second channel (DCHAN), **characterized in that** the arrangement has means with which an action command can be issued, which in the terminal (TER) causes the subscriber number to be determined from the numeric character string and the obtained subscriber number to be stored in a memory (MEM) provided in the terminal (TER) for direct dialling of the subscriber number.

8. Terminal (TER) for a telecommunications network, which can be connected via the telecommunications network to a telephone directory arrangement (ENQ) with a first channel (BCHAN) for voice transmission and a second channel (DCHAN) for data transmission, the terminal (TER) having means with which it can receive a subscriber number of a subscriber line sent from the telephone directory in the form of a numeric character string on the second channel (DCHAN), having means with which it can determine the subscriber number from the numeric character string, **characterized in that** it has a memory (MEM) in which the subscriber number can be stored and from which the terminal (TER) can take the subscriber number for direct dialling of the subscriber line, an action command issued by the telephone directory arrangement causing the subscriber number to be determined from the numeric character string and the obtained subscriber number to be stored in a memory (MEM) provided in the terminal (TER) for direct dialling of the subscriber number.

## Revendications

1. Procédé de transmission d'un numéro de téléphone recherché, à partir d'un dispositif de renseignements téléphoniques (ENQ) vers un terminal (TER) relié au dispositif de renseignements téléphoniques (ENQ) par l'intermédiaire d'un réseau de télécommunication avec un premier canal (BCHAN) pour la transmission vocale et un second canal (DCHAN) pour la transmission de données, lequel procédé comporte les étapes suivantes :
- transmission d'une demande avec les données décrivant l'abonné recherché, du terminal (TER) vers le dispositif de renseignements téléphoniques (ENQ) via le premier canal (BCHAN),
- envoi du numéro de téléphone par le dispositif de renseignements téléphoniques (ENQ) sous forme d'une chaîne de caractères numérique via le second canal (DCHAN),
- transmission de la chaîne de caractères numérique, du dispositif de renseignements téléphoniques (ENQ) vers le terminal (TER) via le second canal (DCHAN),
- réception de la chaîne de caractères numérique par le terminal (TER),
- détermination du numéro de téléphone par le terminal (TER) à partir de la chaîne de caractères numérique,
**caractérisé en ce que** le procédé présente les étapes suivantes :
- enregistrement du numéro de téléphone dans une mémoire (MEM) du terminal (TER) prévue pour une composition directe du numéro de téléphone
- émission d'un ordre d'action par le dispositif de renseignements téléphoniques (ENQ) qui déclenche dans le terminal (TER) la détermination du numéro de téléphone à partir de la chaîne de caractères numérique et l'enregistrement du numéro de téléphone dans une mémoire (MEM) du terminal (TER) prévue pour la composition directe du numéro de téléphone.

2. Procédé selon la revendication 1, **caractérisé en ce que** le numéro de téléphone est affiché sur un dispositif d'affichage du terminal (TER).

3. Procédé selon la revendication 1, sachant que le réseau de télécommunication est un réseau RNIS, **caractérisé en ce que** le second canal est un canal D du réseau RNIS.

4. Procédé selon la revendication 1, sachant que le réseau de télécommunication est un réseau de téléphonie mobile GSM, **caractérisé en ce que** le second canal est un canal d'organisation du réseau de téléphonie mobile.

5. Procédé selon la revendication 1, **caractérisé en ce que** le dispositif de renseignements téléphoniques (ENQ) envoie au terminal (TER) les données décrivant l'abonné souhaité sous forme d'une chaîne de caractères alphanumérique via le second canal (DCHAN), et que le terminal (TER) reçoit la chaîne de caractères alphanumérique, détermine les données à partir de la chaîne de caractères alphanumérique et les affiche sur un dispositif d'affichage (DIS).

6. Procédé selon la revendication 1, **caractérisé en ce que** le terminal (TER) envoie, lors d'une pression sur une touche du clavier de numérotation (KEY) du terminal (TER), un message au dispositif de renseignements téléphoniques (ENQ) via le second canal (DCHAN), informant le dispositif de renseignements téléphoniques (ENQ) que d'autres informations sont souhaitées.

7. Dispositif de renseignements téléphoniques (ENQ) pouvant être relié à un terminal (TER) par l'intermédiaire d'un réseau de télécommunication via une liaison avec un premier canal (BCHAN) pour la transmission vocale et un second canal (DCHAN) pour la transmission de données, le dispositif présentant des moyens permettant de convertir un numéro de téléphone en une chaîne de caractères numérique, et des moyens permettant d'envoyer la chaîne de caractères numérique à un terminal (TER) sur un second canal (DCHAN), **caractérisé en ce**
**que** le dispositif présente des moyens grâce auxquels un ordre d'action peut être émis, lequel déclenche dans le terminal (TER) une détermination du numéro de téléphone à partir de la chaîne de caractères numérique et un enregistrement du numéro de téléphone déterminé dans une mémoire (MEM) du terminal (TER) prévue pour une composition directe du numéro de téléphone.

8. Terminal (TER) pour un réseau de télécommunication pouvant être relié à un dispositif de renseignements téléphoniques (ENQ) par l'intermédiaire du réseau de télécommunication via une liaison avec un premier canal (BCHAN) pour la transmission vocale et avec un second canal (DCHAN) pour la transmission de données, le terminal (TER) présentant des moyens lui permettant de recevoir sur le second canal (DCHAN) le numéro de téléphone d'un abonné envoyé par le dispositif des renseignements téléphoniques sous forme d'une chaîne de caractères numérique, et présentant des moyens lui permettant de déterminer le numéro de téléphone d'un abonné à partir de la chaîne de caractères numérique **caractérisé en ce,**
**qu'**il présente une mémoire (MEM) dans laquelle le numéro de téléphone de l'abonné peut être enregistré et duquel le terminal (TER) peut prélever le numéro de téléphone pour composer immédiatement le numéro de l'abonné, sachant qu'un ordre d'action émis par le dispositif de renseignements téléphoniques déclenche une détermination du numéro de téléphone à partir de la chaîne de caractère numérique et un enregistrement du numéro de téléphone déterminé dans une mémoire (MEM) du terminal (TER) prévue pour une composition directe du numéro de téléphone.
